# EUROPÄISCHE PATENTSCHRIFT

(11) **EP 1 432 919 B1**
(45) Veröffentlichungstag und Bekanntmachung des Hinweises auf die Patenterteilung: **09.08.2006**
(21) Anmeldenummer: 02776736.7
(22) Anmeldetag: 27.09.2002
(51) Int. Cl.: F16C 11/06

(54) **KUGELGELENK**
BALL-AND-SOCKET JOINT
JOINT A ROTULE

(30) Priorität: 04.10.2001 DE 20121158 U
(43) Veröffentlichungstag der Anmeldung: 30.06.2004
(73) Patentinhaber: ZF Lemförder Metallwaren AG, 49441 Lemförde (DE)
(72) Erfinder: BOHNE, Manfred, 49448 Quernheim (DE); HEIDEMANN, Manfred, 49191 Belm-Vehrte (DE); SARINGER, Andreas, 49143 Schledehausen (DE); SPREMBERG, Carsten, 49545 Tecklenburg (DE)
(86) Internationale Anmeldenummer: PCT/DE2002/003677
(87) Internationale Veröffentlichungsnummer: WO 2003/031835

(56) Entgegenhaltungen:
- EP-A- 0 165 763
- EP-A- 0 239 210
- EP-A- 0 836 019
- US-A- 4 690 581
- US-A- 4 758 110

## Beschreibung

Die Erfindung betrifft ein Kugelgelenk, vorzugsweise für Fahrwerksaufhängungen oder Lenkungen von Kraftfahrzeugen, mit einem Gelenkgehäuse und einem Gelenkzapfen, der mittels einer kugelförmigen Lagerfläche in einer ein- oder mehrteiligen Lagerschale dreh- und auslenkbar gelagert ist, wobei die Lagerschale ihrerseits im Gelenkgehäuse aufgenommen ist.

Kugelgelenke der eingangs geschilderten Art sind allgemein bekannt und werden in unterschiedlicher Ausgestaltung insbesondere auch im Kraftfahrzeugbereich eingesetzt.

Für die Haltbarkeit derartiger Kugelgelenke ist es unter anderem wichtig, dass die Relativbewegungen zwischen Gehäuse und der in diesem aufgenommenen Lagerschale unter allen Betriebsbedingungen möglichst gering sind. Dies wird üblicherweise dadurch erreicht, dass das Gehäuse zweiteilig ausgeführt ist, wobei die Lagerschale durch eine Montageöffnung in eine Bohrung eines Gehäusehauptteiles eingesetzt ist und die Montageöffnung danach mittels eines Gehäusedeckels geschlossen wird. Der Gehäusedeckel wird üblicherweise durch einen Verrollvorgang mit dem Gehäusehauptteil verbunden, in dem eine Rollkante umgebördelt wird, so dass eine dauerhafte Verbindung zwischen den beiden in Rede stehenden Bauteilen erfolgt. Im Rahmen des Verrollungsvorganges ergibt sich durch spezielle bauliche Gegebenheiten und entsprechende Toleranzen eine Anpresskraft in axialer Längsrichtung des Kugelgelenkes auf die Lagerschale, so dass diese unter normalen Rahmenbedingungen verdrehfest im Gehäuse aufgenommen wird. Gleichzeitig ist der beim Verrollungsvorgang aufgebrachte Anpressdruck wesentlich verantwortlich für die Leicht- oder Schwergängigkeit des Kugelgelenkes im Normalbetrieb. In Folge der Toleranzen bei den Abmessungen der Gehäusebohrung, des Gehäusedeckels sowie der Lagerschale selbst kommt es in nicht seltenen Fällen bei der Montage der gattungsgemäßen Kugelgelenke jedoch zu der Problematik, dass die Lagerschale nur unzureichend innerhalb des Gehäuses festgelegt ist, so dass insbesondere bei höheren Beanspruchungen des Kugelgelenkes Relativbewegungen zwischen Lagerschale und Gehäuse nicht ausgeschlossen werden können. Diese Relativbewegungen wiederum führen zu einem erhöhten Verschleiß des Kugelgelenkes und beeinträchtigen von daher die Gesamtlebensdauer negativ.

Die US 4,758,110, siehe oberbegriff des Anspruch 1, offenbart ein Kugelgelenk mit einem Gelenkgehäuse und einem Gelenkzapfen der mittels eines kugelförmigen Gelenkbereichs in einer Lagerschale dreh- und auslenkbar gelagert ist, wobei die Lagerschale ihrerseits im Gelenkgehäuse aufgenommen ist. Das Gelenkgehäuse und die Lagerschale sind durch eine formschlüssige Rastvorrichtung drehfest miteinander verbunden. Hierzu weist die Rastvorrichtung an der dem Gelenkgehäuse zugewandten Außenseite der Lagerschale angeordnete vorstehende Rastnasen und an der inneren Oberfläche des Gelenkgehäuses befindliche korrespondierende Rastausnehmungen zur Aufnahme der Rastnasen auf. Die Rastnasen sind über eine elastische Federkraft in radialer Richtung in der Rastausnehmung spielfrei gehalten, allerdings müssen die Rastnasen aus gründen der Montage in tangentialer Richtung mit Spiel in der Rastausnehmung geführt werden, so dass eine Verdrehung der Lagerschale in dem Gelenkgehäuse innerhalb der Grenzen dieses Toleranzbereiches möglich ist, was zu unerwünschten Betriebsgeräuschen und vorzeitigem Verschleiß führen kann.

Aufgabe der vorliegenden Erfindung ist es daher, ein Kugelgelenk der gattungsgemäßen Art so weiterzubilden, dass Relativbewegungen zwischen dem Gehäuse und der darin aufgenommenen Lagerschale ausgeschlossen werden und somit die Lebensdauer derartiger Kugelgelenke heraufgesetzt wird.

Diese Aufgabe wird erfindungsgemäß durch die kennzeichnenden Merkmale des Anspruchs 1 gelöst. Diese Art von Rastvorrichtung stellt sicher, dass auch bei größtmöglicher Beanspruchung des Kugelgelenkes die Lagerschale jederzeit an dem ihr zugedachten Platz innerhalb des Gehäuses verbleibt. Es ist nämlich vorgesehen, die Rastausnehmung geringfügig größer zu bemessen als die zugehörige in dieser Rastausnehmung aufgenommene Rastnase. Das durch diese Maßnahme herbeigeführte Spiel in der Axialbewegung zwischen Lagerschale und Gehäuse erleichtert die Montage, wobei die Abmessungen der Bauteile so gewählt sind, dass nach Beendigung der Montage des Kugelgelenkes bei entsprechenden Belastungen auf Grund der Elastizität des Lagerschalenmaterials das zugehörige Spiel beseitigt wird und somit wiederum Relativbewegungen zwischen den in Rede stehenden Bauteilen ausgeschlossen sind. Rastnase und Rastausnehmung sind in ihrer Ausgestaltung so ausgeführt, dass ein leichtes Einschnappen der miteinander korrespondierenden Bauteile gewährleistet ist.

Besondere Ausgestaltungen des Gegenstandes der Erfindung ergeben sich in Zusammenschau mit der technischen Lehre des Anspruches 1 aus den Merkmalen der Unteransprüche.

So kann es zweckmäßig sein, zwischen Lagerschale und Gehäuse mehrere Rastnasen und mehrere korrespondierende Rastausnehmungen zur Aufnahme der Rastnasen anzuordnen, so dass durch die Rastvorrichtung größere Verdrehkräfte, welche auf die Lagerschale einwirken, aufgenommen werden können.

Im Folgenden wird ein Ausführungsbeispiel des Erfindungsgegenstandes anhand der beigefügten Zeichnungen näher erläutert. Es zeigt:
- Figur 1: eine Längsschnittdarstellung durch ein erfindungsgemäßes Kugelgelenk im Bereich des Gehäuses mit darin aufgenommener Gelenkpfanne und ,
- Figur 2: eine Schnittdarstellung entsprechend der Linie B-B aus Figur 1.

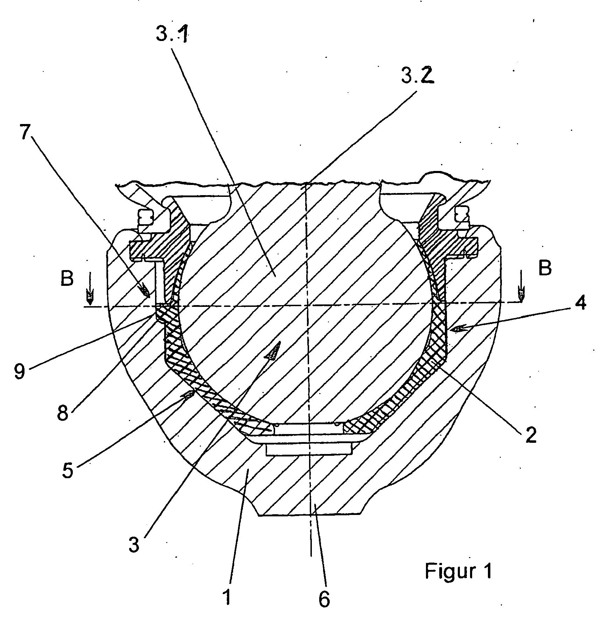

Das erfindungsgemäße Kugelgelenk besteht im Wesentlichen aus einem Gelenkgehäuse 1, einer im Gelenkgehäuse 1 aufgenommenen, vorliegend einteilig ausgeführten Lagerschale 2 und einem Kugelzapfen 3, der aus einem kugelförmig ausgebildeten Gelenkbereich 3.1 und einem in der Darstellung der Figur 1 nicht näher ausgeführten Zapfenbereich 3.2 besteht, der kraftfahrzeugseitig an einer Karoserieaufnahme festgelegt ist.

Die Lagerschale 2 ist an ihrer dem Gelenkbereich 3.1. zugewandten Innenseite hohlkugelförmig ausgebildet, so dass der Kugelzapfen 3 sowohl Drehbewegungen als auch Kippbewegungen innerhalb des Gelenkgehäuses 1 ausführen kann. Die Lagerschale 2 ist an ihrer dem Gelenkgehäuse 1 zugewandten Außenseite in einem Teilbereich 4 zylinderförmig ausgebildet und weist darüber hinaus einen zweiten Teilbereich 5 auf, der sich gegenüber dem zylinderförmigen Teilbereich 4 im Winkel von ungefähr 45° zum Kopfende 6 des Gelenkgehäuses 1 verjüngt, so dass eine kegelstumpfförmige Kontur entsteht.

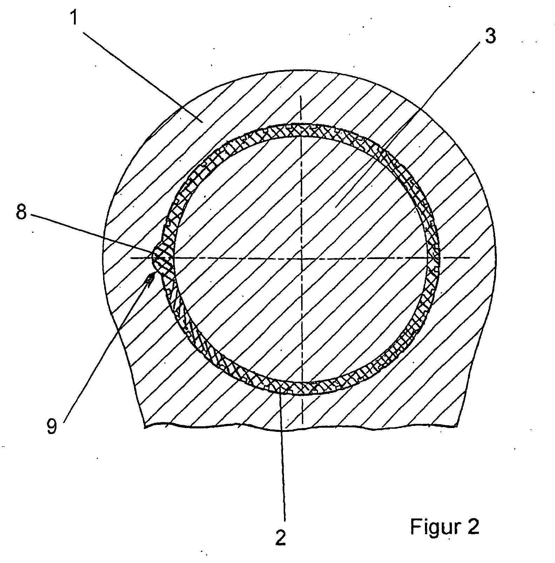

Der Figur 1 ist zu entnehmen, dass die Lagerschale 2 im Bereich ihres zylinderförmigen Teilbereiches 4 mittels einer Rastvorrichtung 7, welche aus einer an der Lagerschale angeordneten Rastnase 8 und einer korrespondierenden im Gelenkgehäuse 1 angeordneten Rastausnehmung 9 besteht, so festgelegt ist, dass Relativbewegungen zwischen Lagerschale 2 und Gelenkgehäuse 1 ausgeschlossen sind. Rastnase 8 und Rastausnehmung 9 sind hierbei an den zueinander gewandten Flächen, wie dies der Figur 2 entnommen werden kann, im Wesentlichen halbkreisförmig ausgebildet. Dabei ist die Rastausnehmung 9 geringfügig größer ausgeführt, als für die Ausnahme der Rastnase 8 notwendig wäre. Dies erleichtert ein Einführen der Rastnase 8 in die Rastausnehmung 9. Unter Belastung, d.h. bei eingesetztem Kugelzapfen 3 wird durch die elastischen Eigenschaften des Lagerschalenmaterials das durch die vorhandenen Toleranzen vorhandene Spiel zwischen den miteinander korrespondierenden Bauteilen der Rastvorrichtung 7 ausgeglichen, so dass eine Relativbewegung von Lagerschale 2 und Gelenkgehäuse 3 ausgeschlossen ist.

Im Ausführungsbeispiel der Figuren 1 und 2 besteht die Rastvorrichtung nur aus einem auf der Außenkontur der Lagerschale wirkenden Rastpaar (Rastnase, Rastausnehmung). Es ist selbstverständlich denkbar, zur Gewährleistung der Unbeweglichkeit zwischen Lagerschale 2 und Gelenkgehäuse 1 am Außenumfang der Lagerschale 2 auch mehrere gleichgestaltete Rastpaare anzuordnen. Dies wird vorzugsweise mittels symmetrisch am Umfang angeordneter Rastnasen und Rastausnehmungen verwirklicht.

### Bezugszeichenliste:

- 1.: Gelenkgehäuse
- 2.: Lagerschale
- 3.: Kugelzapfen
- 3.1: Gelenkbereich
- 3.2: Zapfenbereich
- 4.: Teilbereich
- 5.: Teilbereich
- 6.: Kopfende
- 7.: Rastvorrichtung
- 8.: Rastnase
- 9.: Rastausnehmung

## Patentansprüche

1. Kugelgelenk, vorzugsweise für Fahrwerksaufhängungen oder Lenkungen von Kraftfahrzeugen, mit einem Gelenkgehäuse (1) und einem Gelenkzapfen (3), der mittels eines kugelförmigen Gelenkbereichs (3.1) in einer ein- oder mehrteiligen Lagerschale (2) dreh- und auslenkbar gelagert ist, wobei die Lagerschale (2) ihrerseits im Gelenkgehäuse (1) aufgenommen ist, wobei das Gelenkgehäuse (1) und die Lagerschale (2) durch eine formschlüssige Rastvorrichtung (7) drehfest miteinander verbunden sind und die Rastvorrichtung (7) eine an der dem Gelenkgehäuse (1) zugewandten Außenseite der Lagerschale (2) oder an der inneren Oberfläche des Gelenkgehäuses (1) angeordnete vorstehende Rastnase (8) und eine an der inneren Oberfläche des Gelenkgehäuses (1) oder an der dem Gelenkgehäuse (1) zugewandten Außenseite der Lagerschale (2) befindliche korrespondierende Rastausnehmung (9) zur Aufnahme der Rastnase aufweist
**dadurch gekennzeichnet, dass**
die Rastausnehmung (9) geringfügig größer bemessen ist als die zugehörige in dieser Rastausnehmung (9) aufgenommene Rastnase (8), derart, dass unter Belastung dass vorhandene Spiel zwischen Rastausnehmung (9) und Rastnase (8) ausgleichbar ist, so daß Relativbewegungen zwischen Lagerschale (2) und Gelenkgehäuse (1) ausgeschlossen sind.

2. Kugelgelenk nach Anspruch 1,
**dadurch gekennzeichnet, dass**
am Außenumfang der Lagerschale (2) mehrere Rastnasen (8) und an der inneren Oberfläche des Gelenkgehäuses (1) mehrere korrespondierende Rastausnehmungen (9) zur Aufnahme der Rastnasen (8) angeordnet sind.

3. Kugelgelenk nach Anspruch 1,
**dadurch gekennzeichnet, dass**
am Außenumfang der Lagerschale (2) mehrere Rastausnehmungen zur Aufnahme der Rastnasen und an der inneren Oberfläche des Gelenkgehäuses (1) mehrere korrespondierende Rastnasen angeordnet sind.

4. Kugelgelenk nach einem der Ansprüche 1 bis 3,
**dadurch gekennzeichnet, dass**
die Rastnase (8) einen gekrümmten, insbesondere halbkreisförmig vorstehenden Querschnitt aufweist.

## Claims

1. Ball joint, preferably for chassis suspension systems or steering systems of motor vehicles, said ball joint having a joint housing (1) and a joint pin (3) which is mounted in a one-piece or multi-piece bearing shell (2) in a rotatable and deflectable manner by means of a ball-shaped joint region (3.1), wherein said bearing shell (2) is, in turn, received in the joint housing (1) and wherein the joint housing (1) and the bearing shell (2) are connected to one another in a twist-proof manner by a form-locking latching device (7) and said latching device (7) has a projecting latching nose (8) disposed on that outer side of the bearing shell (2) which faces towards the joint housing (1) or on the inner surface of said joint housing (1), and a corresponding latching recess (9), which is located on the inner surface of said joint housing (1) or on that outer side of the bearing shell (2) which faces towards the joint housing (1), for receiving the latching nose,
**characterised in that**
the latching recess (9) is of slightly larger dimensions than the appertaining latching nose (8) received in said latching recess (9), in such a way that, under load, the play existing between said latching recess (9) and said latching nose (8) can be compensated for, so that relative movements between the bearing shell (2) and the joint housing (1) are precluded.

2. Ball joint according to Claim 1,
**characterised in that**
a number of latching noses (8) are disposed on the outer periphery of the bearing shell (2), and a number of corresponding latching recesses (9) for receiving said latching noses (8) are disposed on the inner surface of the joint housing (1).

3. Ball joint according to Claim 1,
**characterised in that**
a number of latching recesses for receiving the latching noses are disposed on the outer periphery of the bearing shell (2), and a number of corresponding latching noses are disposed on the inner surface of the joint housing (1).

4. Ball joint according to one of Claims 1 to 3,
**characterised in that**
the latching nose (8) has a curved cross-section which, in particular, projects in a semicircular manner.

## Revendications

1. Articulation à rotule, en particulier pour suspensions de châssis ou systèmes de direction de véhicules automobiles, comprenant un boîtier d'articulation (1) et un pivot à rotule (3) qui est monté, au moyen d'une partie d'articulation sphérique (3.1), de façon pivotante et oscillante dans une coquille de palier (2) monobloc ou en plusieurs parties, la coquille de palier (2) étant à son tour logée dans le boîtier d'articulation (1), le boîtier d'articulation (1) et la coquille de palier (2) étant reliés l'un à l'autre de façon fixe en rotation par l'intermédiaire d'un dispositif d'arrêt (7) à couplage de formes, et le dispositif d'arrêt (7) comportant un nez d'arrêt saillant (8) aménagé à la surface extérieure de la coquille de palier (2), qui est tournée vers le boîtier d'articulation (1), ou à la surface intérieure du boîtier d'articulation (1), et un évidement d'arrêt correspondant (9) destiné à recevoir le nez d'arrêt, aménagé dans la surface intérieure du boîtier d'articulation (1), ou dans la surface extérieure de la coquille de palier (2), qui est tournée vers le boîtier d'articulation (1),
**caractérisée en ce que**
l'évidement d'arrêt (9) est légèrement plus grand que le nez d'arrêt (8) conjugué, reçu dans cet évidement d'arrêt (9), de façon que, sous charge, le jeu existant entre l'évidement d'arrêt (9) et le nez d'arrêt (8) puisse être absorbé, de sorte que des mouvements relatifs entre la coquille de palier (2) et la boîtier d'articulation (1) puissent être exclus.

2. Articulation à rotule selon la revendication 1, **caractérisée en ce que** plusieurs nez d'arrêt (8) sont aménagés sur le pourtour extérieur de la coquille de palier (2), et que plusieurs évidements d'arrêt correspondants (9) destinés à recevoir les nez d'arrêt (8) sont aménagés dans la surface intérieure du boîtier d'articulation (1).

3. Articulation à rotule selon la revendication 1, **caractérisée en ce que** plusieurs évidements d'arrêt destinés à recevoir les nez d'arrêt sont aménagés dans la surface extérieure de la coquille de palier (2), et que plusieurs nez d'arrêt correspondants sont aménagés à la surface intérieure du boîtier d'articulation (1).

4. Articulation à rotule selon l'une des revendications 1 à 3, **caractérisée en ce que** le nez d'arrêt (8) présente une section transversale courbe, en particulier une section saillante semi-circulaire.
